(19) Europäisches Patentamt
European Patent Office
Office européen des brevets

(11) Veröffentlichungsnummer : **0 158 931**
**B1**

(12) # EUROPÄISCHE PATENTSCHRIFT

(45) Veröffentlichungstag der Patentschrift : **28.09.88**

(21) Anmeldenummer : **85104065.9**

(22) Anmeldetag : **03.04.85**

(51) Int. Cl.⁴ : **C 08 L 69/00**, C 08 L 51/04, C 08 L 25/08, C 08 K 3/20 // (C08L55/02, 25:08),(C08L69/00, 55:02, 25:08, 9:06)

(54) **Thermoplastische Formmassen auf Basis von Polycarbonat-Pfropfpolymerisat-Gemischen.**

(30) Priorität : **12.04.84 DE 3413751**

(43) Veröffentlichungstag der Anmeldung : **23.10.85 Patentblatt 85/43**

(45) Bekanntmachung des Hinweises auf die Patenterteilung : **28.09.88 Patentblatt 88/39**

(84) Benannte Vertragsstaaten :
**DE FR GB IT NL**

(56) Entgegenhaltungen :
**EP-A- 0 089 042**
**DE-A- 2 019 325**
**DE-A- 2 446 327**
**PATENT ABSTRACTS OF JAPAN, Band 6, Nr. 223, 9. November 1982, Seite (C-133) (1101); & JP-A-57-125253 (SUMITOMO KAGAKU KOGYO K.K.) 04-08-1982**
**PATENT ABSTRACTS OF JAPAN, Band 8, Nr. 41, 22. Februar 1984, Seite (C-211) (1478); & JP-A-58-201842 (TORAY K.K.) 24-11-1983**

(73) Patentinhaber : **BAYER AG**
**Konzernverwaltung RP Patentabteilung**
**D-5090 Leverkusen 1 Bayerwerk (DE)**

(72) Erfinder : **Lindner, Christian, Dr.**
**Riehlerstrasse 200**
**D-5000 Koeln 60 (DE)**
Erfinder : **Koch, Otto, Dr.**
**Am Morgengraben 12**
**D-5000 Koeln 80 (DE)**
Erfinder : **Kress, Hans-Jürgen, Dr.**
**Scheiblerstrasse 111**
**D-4150 Krefeld 1 (DE)**
Erfinder : **Peters, Horst, Dr.**
**Winterberg 25**
**D-5090 Leverkusen 3 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 158 931 B1**

Jouve, 18, rue St-Denis, 75001 Paris, France

**Beschreibung**

Gegenstand der vorliegenden Erfindung sind thermoplastische Formmassen, enthaltend

A) 10 bis 80 Gew.-Teile eines aromatischen, thermoplastischen Polycarbonats

B) 10 bis 60 Gew.-Teile eines Pfropfpolymerisats von ethylenisch ungesättigten Monomeren auf Kautschuke mit einem Kautschukgehalt von 5 bis 80 Gew.-%, bezogen auf Gewicht der Komponente B), und

C) 10 bis 60 Gew.-Teile eines thermoplastischen, harzartigen, hochmolekularen, kautschukfreien Copolymerisats, wobei die Summe der Gewichtsteile A + B + C jeweils 100 beträgt, und gegebenenfalls

D) 1 bis 20 Gew.-Teile, vorzugsweise 5 bis 20 Gew.-Teile, bezogen jeweils auf die Summe der Gew.-Teile A + B + C + D, welche wiederum jeweils 100 beträgt, eines zumindest partiell vernetzten Butadien-Acrylnitril-Copolymerkautschuks, der Acrylnitril zu Butadien im Gewichtsverhältnis von 15 zu 85 bis 35 zu 65, vorzugsweise von 20 zu 80 bis 30 zu 70 einpolymerisiert enthält, und der eine Teilchengröße von 0,05 µm bis 0,3 µm, vorzugsweise von 0,08 µm bis 0,2 µm hat,

die dadurch gekennzeichnet sind, daß die Komponente C ein Terpolymerisat aus Styrol, Acrylnitril und einer ethylenisch ungesättigten Epoxidverbindung ist, wobei das Verhältnis von Styrol zu Acrylnitril zwischen 90 : 10 und 50 : 50 liegt und wobei C) 0,05 bis 5 Gew.-% vorzugsweise 0,1 bis 3 Gew.-% bezogen auf Gewicht der Komponente C), an ethylenisch ungesättigten Epoxidverbindung copolymerisiert enthält.

In den erfindungsgemäßen Formmassen kann die erfindungsgemäße Komponente C auch eine Mischung aus zwei oder mehr als zwei thermoplastischen, hochmolekularen Copolymerisaten sein, von denen nur eine die Epoxidverdindung copolymerisiert enthält, wobei jedoch die Gesamtmenge der copolymerisierten Epoxidverbindung in der Mischung der Komponente C wiederum 0,05 bis 5 Gew.-%, vorzugsweise 0,1 bis 3 Gew.-%, bezogen auf das Gewicht der Mischung der Komponente C, beträgt.

Das Verhältnis von Styrol zu Acrylnitril liegt vorzugsweise zwischen 80 : 20 und 65 : 35.

Die erfindungsgemäßen Formmassen können außerdem Flammschutzmittel, wie organische Halogenverbindungen oder Antimonoxide, ferner Pigmente, Gleitmittel, Antistatika, Weichmacher, Farbstoffe und/oder Füllstoffe der für Polycarbonat-Pfropfpolymerisat-Abmischungen üblichen Art in der jeweils wirksamen Menge enthalten.

Mischungen aus Polycarbonaten und Pfropfpolymerisaten sind seit langem bekannt und in technischem Einsatz. Für spezielle Anwendungen, beispielsweise im Automobilsektor sind besonders gute Eigenschaftskombinationen gefragt, nämlich eine hohe Wärmeformbeständigkeit, eine hohe Zähigkeit, eine hohe Temperaturbelastbarkeit unter den Verarbeitungsbedingungen sowie als Spritzgußteile eine matte Oberfläche. Eine derartige Eigenschaftskombination war mit den bislang bekannten Polycarbonat-ABS-Abmischungen noch nicht zu erreichen.

Bekannt sind zwar Abmischungen von Polycarbonaten mit Copolymeren aus Glycidyl-(meth)acrylat und χ-Olefinen, die eine Verbesserung der Schlagzähigkeit und der kritischen Breite erreichen (siehe Sumitomo Chemical Co., Jp 57/125 253 vom 04.08.1982, Anmeldenummer 81/12 142 vom 28.01.1981).

Bekannt sind auch Mischungen aus ABS-Polymerisaten mit Glycidylmethacrylat-Copolymeren mit guten Dimensionsstabilität, Oberflächenerscheinung und guten Adhäsionseigenschaften (siehe Sumitomo Naugatuck, Jp. 57/098 541 vom 18.06.1982, Anmeldenummer 80/174 865 vom 10.12.1980).

Bekannt sind auch schlagzähe und wetterbeständige, kautschukmodifizierte Polymerisate, die Glycidylmethacrylate oder Glycidylacrylate einpolymerisiert enthalten (siehe Asahi Dow, Jp. 74/020 628 vom 25.05.1974, Anmeldenummer 037 181 vom 02.05.1970).

Bekannt sind auch Mischungen aus Polycarbonaten mit bromhaltigen Pfropfpolymerisaten, die $Sb_2O_3$ und Epoxyverbindungen zugemischt enthalten, beispielsweise ein epoxidiertes $C_{30}$-$C_{42}$-Olefin. Die Formmassen haben gute Flammwidrigkeit (UL-94, SE-O) und eine Kerbschlagzähigkeit von 20 $kgcm/cm^2$, eine Wärmeformbeständigkeit von 99 °C und einen Glanz von 75 % (siehe Daicel, Jp. 50/086 551 vom 11.07.1975, Anmeldenummer 136 317 vom 03.12.1973).

Bekannt sind auch Mischungen aus Polycarbonaten mit kautschukmodifizierten Copolymeren und mit einem epoxygruppenhaltigen Olefincopolymer. Diese Abmischungen haben verbesserte Fließnahtfestigkeiten. (siehe EP-OS 0 089 042).

Bekannt sind auch Mischungen von Polycarbonaten mit kautschukmodifizierten Styrol-Maleinsäureanhydrid-Copolymeren und Epoxyharzen und/oder Phenoxyharzen. Diese Abmischungen haben ebenfalls verbesserte Fließnahtfestigkeiten (siehe EP-OS 00 96 893).

Demgegenüber war es überraschend, daß die erfindungsgemäßen Formmassen gegenüber diesen bekannten Formmassen neue Vorteile aufweisen, wie erhöhte Temperaturbelastungsgrenze, verbesserte Wärmeformbeständigkeit bei sehr guter Zähigkeit und homogene, matte Oberflächenqualität der aus den Formmassen hergestellten Formkörper durch z. B. Spritzguß oder Extrusionsverarbeitung.

Aromatische thermoplastiche Polycarbonate gemäß Komponente A im Sinne der Erfindung sind Homopolycarbonate und Copolycarbonate aus den zweibindigen Struktureinheiten der Formel I

(Siehe Formel I Seite 3 f.)

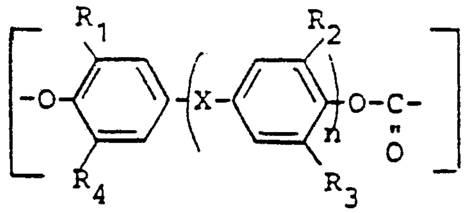

(I)

worin

$R_1$ bis $R_4$ gleich oder verschieden und H oder Br oder Cl sind,

« n » 0 oder 1 ist und

X eine Einfachbindung, $C_1$-$C_5$-Alkylen, $C_2$-$C_5$-Alkyliden, Cyclohexyliden, —S—, —O—, —CO—, —SO—, —$SO_2$— oder

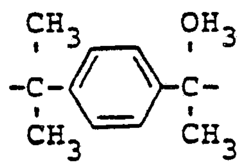

ist.

Derartige Polycarbonate sind literaturbekannt (siehe beispielsweise H. Schnell, Chemistry and Physics of Polycarbonates, Interscience Publishers, New York, 1964) und aus den entsprechenden, bekannten Diphenolen (II) nach bekannten Verfahren unter Mitverwendung von Kettenabbrechern erhältlich. Bevorzugtes Verfahren ist das Zweiphasengrenzflächenverfahren.

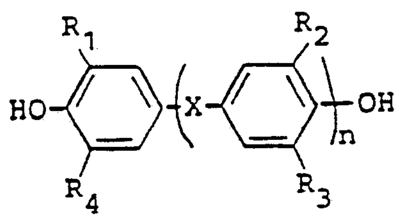

(II)

Besonders bevorzugte Diphenole sind 4,4'-Dihydroxydiphenyl, 2-2-Bis-(4-hydroxyphenyl)-propan, 2,4-Bis-(4-hydroxyphenyl)-2-methylbutan, 1,1-Bis-(4-hydroxyphenyl)-cyclohexan, α,α'-Bis-(4-hydroxyphenyl)-p-diisopropyl-benzol, 2,2-Bis-(3-chlor-4-hydroxyphenyl)-propan, α,α'-Bis-(3,5-dichlor-4-hydroxyphenyl)-propan und 2,2-Bis-(3,5-dibrom-4-hydroxyphenyl)-propan.

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrunde liegen, oder Homopolycarbonate aus 2,2-Bis-(4-hydroxyphenyl)-propan.

Die aromatischen Polycarbonate können durch den Einbau geringer Mengen, vorzugsweise von Mengen zwischen 0,05 und 2,0 Mol-% (bezogen auf eingesetzte Diphenole) an drei- oder mehr als dreifunktionellen Verbindungen, z. B. solchen mit drei oder mehr als drei phenolischen Hydroxygruppen in bekannter Weise verzweigt sein.

Die aromatischen Polycarbonate sollen in der Regel mittlere Gewichtsmittel-Molekulargewichte $\bar{M}_w$ von 10 000 bis über 200 000, vorzugsweise von 20 000 bis 80 000 haben (ermittelt durch Messungen der rel. Viskosität in $CH_2Cl_2$ bei 25 °C bei einer Konzentration von 0,5 Gew.-%).

Pfropfpolymerisate gemäß Komponente B im Sinne der Erfindung sind im Prinzip bekannte Pfropfpolymerisate von ethylenisch ungesättigten Monomeren auf Kautschuke aus der Reihe der Dienmonomer-, Alkylacrylat- und EPDM-Kautschuke.

Pfropfpolymerisate B im Sinne der Erfindung sind insbesondere solche, in denen auf einen der vorgenannten Kautschuke eine Monomerenmischung von 95 bis 50 Gew.-% Styrol, α-Methylstyrol, Methylmethacrylat oder Mischungen daraus und 5 bis 50 Gew.-% Acrylnitril, Methylmethacrylat oder Mischungen daraus pfropfpolymerisiert ist.

Geeignete Kautschuke sind beispielsweise Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen Alkylesters von Acryl- oder Methacrylsäure, beispielsweise Methylacrylat, Ethylacrylat, Methylmethacrylat oder Ethylmethacrylat. Weitere geeignete Kautschuke sind beispielsweise Polyisopren oder Polychloropren. Geeignet sind weiterhin Alkylacrylatkautschuke auf der Basis von $C_1$-$C_8$-Alkylestern der Acrylsäure beispielsweise von Ethyl-, Butyl- oder/und Ethylhexylacrylat. Diese Alkylacrylatkautschuke können gegebenenfalls bis zu 30 Gew.-% Monomere wie Vinylacetat, Acrylnitril, Styrol, Methylmethacrylat oder Vinylether copolymerisiert enthalten. Diese Alkylacrylatkautschuke enthalten durchweg weiterhin kleinere Mengen, etwa bis zu 5

Gew.-%, vernetzend wirkende ethylenisch ungesättigte Monomere. Solche Vernetzer sind beispielsweise Alkylendioldi(meth)acrylate, Polyesterdi(meth)acrylate, Di- und Trivinylbenzol, Triallylcyanurat und Allyl(meth)acrylat. Solche Alkylacrylatkautschuke sind literaturbekannt. Andere geeignete Kautschuke sind beispielsweise EPDM-Kautschuke, also Kautschuke aus Ethylen, Propylen und einem unkonjugierten Dienmonomer.

Die erfindungsgemäß geeigneten Kautschuke zur Herstellung der Pfropfpolymerisate der Komponente B besitzen eine teilchenförmige Struktur mit Teilchengrößen ($d_{50}$-Werte) von 0,08 µm bis 5 µm, insbesondere von 0,1 µm bis 1 µm ; außerdem liegen sie zumindest in partiell vernetzter Form in den Pfropfpolymerisaten B) vor. Besonders bevorzugte Kautschuke sind Dienmonomer- oder Alkylacrylatkautschuke.

Die Pfropfmischpolymerisate gemäß Komponente B bestehen aus 5 bis 80 Gew.-%, insbesondere 20 bis 70 Gew.-%, Kautschuk und 95 bis 20 Gew.-%, insbesondere 80 bis 30 Gew.-%, pfropfcopolymerisierte Monomere. Derartige Pfropfmischpolymerisate werden durch bekannte radikalische Pfropfcopolymerisation der obengenannten Monomeren in Gegenwart der zu pfropfenden Kautschuke hergestellt. Bevorzugte Pfropfverfahren sind Emulsions-, Lösungs-, Masse- oder Suspensionspfropfpolymerisation.

Für die Herstellung der Pfropfpolymerisatkomponente B geeignete Acrylatkautschuke als Pfropfgrundlage können auch Produkte sein, die einen vernetzten Dienkautschuk aus einem oder mehreren konjugierten Dienen, wie Polybutadien, oder aus einem Copolymerisat eines konjugierten Diens mit einem ethylenisch ungesättigten Monomer, wie Styrol und/oder Acrylnitril, als Kern enthalten.

Pfropfpolymerisate B im Sinne der Erfindung sind solche, zu deren Herstellung Monomere in Gegenwart eines Kautschuks polymerisiert werden. Solche Pfropfpolymerisate bestehen üblicherweise aus gepfropftem Kautschuk und ungepfropftem Monomerpolymerisat. Der wirkliche Gehalt an Pfropfkautschuk und ungepfropften Monomerpolymerisat in der Komponente B kann durch die bekannten Größen wie Pfropfgrad oder Pfropfausbeute angegeben werden. Derartige Pfropfausbeuten können durch Propfpolymerisationsbedingungen in weiten Bereichen variiert werden.

Pfropfpolymerisate B im Sinne der Erfindung stellen also durchweg Gemische aus gepfropftem Kautschuk und Copolymerisat der zur Pfropfung vorgesehenen Monomeren dar.

Zur Herstellung der im Prinzip bekannten erfindungsgemäß einzusetzenden Komponenten C geeignete ungesättigte Epoxidverbindungen sind beispielsweise Glycidyl(meth)acrylat, Allylglycidylether, Propenylglycidylether, insbesondere aber Glycidyl(meth)acrylat.

Bevorzugte Copolymerisate C sind solche aus Styrol, Acrylnitril und Glycidyl(meth)acrylat.

Die thermoplastischen, epoxidgruppenhaltigen Copolymerisate gemäß Komponente C haben mittlere Molekulargewichte $\bar{M}_w$ (Gewichtsmittel) von größer 30 000, insbesondere von 50 000 bis 200 000, wobei $\bar{M}_w$ ermittelt ist durch Lichtstreuung oder Sedimentation.

Die Herstellung der epoxidgruppenhaltigen Copolymerisate gemäß Komponente C erfolgt beispielsweise durch die bekannte Lösungspolymerisation in organischen Kohlenwasserstoffen, wobei solche Bedingungen einzuhalten sind, daß eine Hydrolyse der Epoxidgruppe vermieden wird. Geeignete Bedingungen sind beispielsweise : Niedrige Gehalte an polaren Lösungsmitteln wie Wasser, Alkohol, Säuren oder Basen und Arbeiten in Lösungsmitteln aus der Gruppe der organischen Kohlenwasserstoffe, die gegenüber Epoxidgruppen inert sind, wie z. B. Toluol, Ethylbenzol, Xylol, hochsiedende Aliphaten, Ester oder Ether.

Die Herstellung der epoxidgruppenhaltigen Copolymerisate gemäß Komponente C kann durch Substanzpolymerisation erfolgen, wobei folgende Bedingungen in etwa zu beachten sind : Arbeiten unter thermischer oder radikalisch initiierter Polymerisation bei Temperaturen von 40 °C bis 150 °C, insbesondere 80 bis 130 °C, insbesondere unter kontinuierlicher Fahrweise und partiellem Monomerumsatz, so daß das gewonnene Polymer als Lösung im Monomersystem anfällt.

Für die im Gemisch mit dem epoxidhaltigen Copolymerisaten geeigneten bekannten epoxidfreien, thermoplastischen Copolymerisate sind als Monomere beispielsweise folgende geeignet : Styrol, Acrylnitril.

Die Molekulargewichte der epoxidfreien Copolymerisate $\bar{M}_w$ (Gewichtsmittelmolekulargewicht) sollen zwischen 30 000 und 200 000 liegen, ermittelt durch Lichtstreuung oder Sedimentation.

Bevorzugte erfindungsgemäße Formmassen enthalten epoxidfreie thermoplastische Copolymerisate in Kombination mit epoxidhaltigen thermoplastischen Copolymerisaten, wobei insbesondere in beiden Komponenten die Art der epoxidfreien Monomerbausteine identisch sein soll.

Die Herstellung der epoxidfreien Copolymerisate erfolgt in bekannter Weise durch Lösungs-, Masse-, Emulsions-, Fällungs-, Dispersionspolymerisation, insbesondere aber durch Lösungs-, Masse- oder Emulsionspolymerisation.

Die zumindest partiell vernetzten Butadien-Acrylnitril-Copolymerkautschuke gemäß Komponente D sind bekannte polymere Verbindungen und enthalten Acrylnitril zu Butadien im Gewichtsverhältnis von 15 zu 85 bis 35 zu 65, vorzugsweise von 20 zu 80 bis 30 zu 70. Die Copolymerkautschuke können gegebenenfalls noch andere ungesättigte Monomere wie beispielsweise Alkyl(meth)acrylate, Styrol oder Vinylethylether in untergeordneten Mengen einpolymerisiert enthalten.

Die Vernetzung der Butadien-Acrylnitril-Copolymerkautschuke D erfolgt in bekannter Weise wie für die Pfropfpolymerisate B bereits beschrieben. Die Kautschuke D haben teilchenförmige Struktur- und Gelgehalte bei Raumtemperatur von mindestens 20 Gew.-%, vorzugsweise von mindestens 40 Gew.-%,

bezogen auf Gewicht des Copolymerkautschuks D.

Die Herstellung der Copolymerkautschuke erfolgt in bekannter Weise, vorzugsweise durch radikalische Emulsionspolymerisation. Partielle Vernetzung heißt, daß in diesem Fall der Gelgehalt der Kautschuke größer 20 Gew.-%, insbesondere größer 40 Gew.-% sein soll.

Als geeignete organische Halogenverbindungen sind beispielsweise Hexachlorcyclopentadien, Hexabromdiphenyl, Octabromdiphenyl, Tribromphenoxymethan, Decabromdiphenyl, Decabromdiphenyloxid, Octabromdiphenyloxid, Bis-(2,4,6-tribromphenyl)-carbonat, Tetrabromphthalimid, Hexabrombuten, Trichlortetrabromtoluol, Pentabromphenyl-triphosphat, Hexabromcyclododecan sowie oligomere und polymere, kernbromierte Polyphenylenoxide.

Ihre wirksame, zur flammwidrigen Ausrüstung der erfindungsgemäßen Formmassen notwendige Menge richtet sich in erster Linie nach dem Halogengehalt der Verbindungen sowie nach der Art des Halogens, ob Brom oder Chlor, wobei in den erfindungsgemäßen Formmassen aus A, B, C inclusive Halogenverbindung und gegebenenfalls D ein Halogengehalt zwischen 0,5 Gew.-% und 8 Gew.-%, bezogen jeweils auf Gesamtgewicht der erfindungsgemäßen Formmasse aus den Komponenten A + B + C, inclusive Halogenverbindung und gegebenenfalls D, vorliegen soll. Dieser Halogengehalt kann auch durch bekannte, flammwidrig machende Halogensubstitution in den Komponenten A, B, C und/oder D der erfindungsgemäßen Formmasse eingeführt werden.

Das Antimonoxid-Flammschutzmittel $Sb_2O_3$ kann zwischen 0,5 Gew.-% und 5 Gew.-%, bezogen auf Gesamtgewicht aus den Komponenten A + B + C + $Sb_2O_3$ und gegebenenfalls der Komponente D und gegebenenfalls Halogenverbindung, eingesetzt werden und wird vorzugsweise in Kombination mit der Halogenausrüstung der erfindungsgemäßen Formmasse angewandt.

Die gegebenenfalls einzusetzenden Mengen an den anderen genannten Additiven sind in der Chemie der Polycarbonat-Pfropfpolymerisat-Abmischungen geläufig.

Die erfindungsgemäßen Formmassen können durch Schmelzcompoundierung der Einzelkomponenten bei Temperaturen von 200 bis 280 °C, vorzugsweise 230 bis 250 °C in gebräuchlichen Aggregaten wie Knetern oder Extrudern hergestellt werden.

Die Formmassen der vorliegenden Erfindung lassen sich zur Herstellung von Formkörpern jeder Art verwenden. Insbesondere können Formkörper durch Spritzguß hergestellt werden. Beispiele für herstellbare Formkörper sind: Gehäuseteile jeder Art (z. B. für Haushaltsgeräte wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sich durch sehr gute elektrische Eigenschaften auszeichnen.

## Beispiele

Eingesetzte Polymerisate und Zusätze

A. 1

Aromatisches Polycarbonat aus 2,2-Bis-(4-hydroxyphenyl)-propan (Bisphenol A) mit einer relativen Viskosität von 1,26, gemessen in $CH_2Cl_2$ bei 25 °C (0,5 gew.-%ige Lösung).

A. 2

Aromatisches Polycarbonat aus 10 Gew.-% 2,2-Bis-(4-hydroxy-3,5-dibrom-phenyl)-propan (Tetrabrombisphenol A) und 90 Gew.-% Bisphenol A mit einer relativen Viskosität von 1,284, gemessen in $CH_2Cl_2$ bei 25 °C (0,5 gew.-%ige Lösung).

B.

Pfropfpolymerisat, hergestellt durch Pfropfung von 35 Gew.-Teile Styrol und 15 Gew.-Teile Acrylnitril auf 50 Gew.-Teile eines grobteiligen Polybutadiens (gemäß den Angaben der DE-AS 1 247 665 und 1 269 360 hergestellt über eine Emulsionspolymerisation), wobei der mittlere Teilchendurchmesser der in Latexform vorliegenden Polybutadienpfropfgrundlage zwischen 0,3 und 0,4 µm liegt (diese Teilchengrößenangabe sowie entsprechende Angaben im Text stellen mittlere Teilchendurchmesser ($d_{50}$) dar und werden durch Ultrazentrifugenmessung bestimmt; s. dazu W. Scholtan et al. Colloids Z. Polymere, 250 (1972), S. 783-796).

C. 1

Styrol-Acrylnitril-Copolymerisat mit einem Styrol-Acrylnitril-Verhältnis von 72 : 28 und einer Grenzviskosität von $[\eta] = 0{,}70$ dl/g (Messung in Dimethylformamid bei 20 °C).

C. 2

Ein Styrol-Acrylnitril-Glycidylmethacrylat-Terpolymerisat mit einem Gehalt an eingebautem Acrylnitril von 29 Gew.-% und eingebautem Glycidylmethacrylat von 1,5 Gew.-% wird erhalten, indem man eine Mischung aus 0,7 Gew.-Teilen Glycidylmethacrylat, 44,8 Gew.-Teilen Styrol, 24,5 Gew.-Teilen Acrylnitril, 30 Gew.-Teilen Ethylbenzol, 0,35 Gew.-Teilen dimeres α-Methylstyrol mit 1,1 Gew.-% Azoisobuttersäurenitril (bezogen auf 10 000 Gew.-Teile Monomerengemisch) bei 130 °C bis zu einem Lösungsfeststoff von

35 % terpolymerisiert. Nach Ausdampfen des Lösungsmittels wird ein Harzpolymerisat mit einem Staudinger-Index von 0,69 dl/g (gemessen in DMF bei 20 °C) erhalten.

C. 3

Ein Styrol-Acrylnitril-Glycidylmethacrylat-Terpolymerisat mit einem Gehalt an eingebautem Acrylnitril von 28 Gew.-% und eingebautem Glycidylmethacrylat von 2,4 Gew.-% wird analog der Vorschrift C. 2 erhalten, wobei für die Polymerisation ein Gemisch aus 1,2 Gew.-Teilen Glycidylmethacrylat, 44,3 Gew.-Teilen Styrol, 24,5 Gew.-Teilen Acrylnitril, 30 Gew.-Teilen Ethylbenzol, 0,35 Gew.-Teilen dimeres α-Methylstyrol eingesetzt wird.

Das erhaltene Harz besitzt einen [η]-Wert von 0,72 dl/g, bestimmt wie bei C. 2.

D.

Butadien-Acrylnitril-Copolymerkautschuk mit einem Gehalt an Acrylnitril von 29 Gew.-%, hergestellt über wäßrige Emulsionspolymerisation unter partieller Vernetzung der Emulsionskautschukteilchen. Latexteilchengröße des Kautschuks ist 0,12 µm ($d_{50}$-Wert). Der Kautschuk besitzt einen Gelgehalt von 88 Gew.-%. Nach erfolgter Emulsionspolymerisation wird der Kautschuk durch Koagulation mit Elektrolyt koaguliert und getrocknet.

Herstellung der Formmassen :

Compoundierung der Einzelkomponenten über einen Doppelwellenextruder der Firma Werner & Pfleiderer mit der Bezeichnung ZSK 53. Hierbei wurden die Produkte bei einer Massetemperatur von 242 °C, einer Umdrehungszahl von 60 Upm und einem Durchsatz von 24 kg/h gemischt und anschließend granuliert.

Die für die einzelnen Prüfungen benötigten Prüfkörper wurden mit einer Spritzgußmaschine bei 260 °C (wenn nicht anders angegeben) gefertigt.

Durchgeführte Prüfungen :

Die Bestimmung der Wärmeformbeständigkeit nach Methode Vicat (B) erfolgte gemäß DIN 53 460/ ISO 360.

Die Bestimmung der Oberflächenbeschaffenheit erfolgte visuell an Spritzkörpern (Normkleinstab bzw. Musterplatten der Größe 60 × 40 × 2 mm) die bei einer Spritztemperatur von 260 °C hergestellt wurden.

Die Bestimmung der Kerbschlagzähigkeit erfolgte in Anlehnung an DIN 53 452/ISO R 179 an Flachstäben (90 mm × 10 mm × 4 mm) mit einer V-förmigen Kerbe der Kerbtiefe 2,7 mm.

Bestimmung der Temperaturbelastbarkeitsgrenze :

Das zu prüfende Material wurde 2 bis 3 h bei 110 °C im Turbeture getrocknet und anschließend zu Musterplatten der Abmessungen von 60 × 40 × 2 mm verspritzt. Das benutzte Aggregat war ein Monomat 25, wobei die Verarbeitungsbedingungen wie folgt waren :

| | |
|---|---|
| Schneckendrehzahl | 100/min |
| Einspritzgeschwindigkeit | 2,5 s |
| Nachdruck | 60 bar |
| Verweilzeit des Materials im Aggregat | 6,5 min. |

Die Massetemperatur wurde in 10 °C-Intervallen von 220 °C auf 300 °C erhöht. Bei jeder Temperatur wurden 10 Musterplatten hergestellt und visuell auf ihre Oberflächenbeschaffenheit hin beurteilt. Als Temperaturbelastbarkeitsgrenze wird dabei die Temperatur angenommen, bei der sich erste Oberflächenstörungen (z. B. Schlieren) ergaben.

(Siehe Beispiele Seite 7 f.)

**Beispiele**

| | | | | | | | | | | | |
|---|---|---|---|---|---|---|---|---|---|---|---|
| Zusammensetzung | | | | | | | | | | | |
| Polycarbonat A 1 | Gew.-Tl. | 60[1] | 60 | 60 | 60 | 65[1] | 65 | 55,8[1] | 55,8 | – | – |
| Polycarbonat A 2 | " | – | – | – | – | – | – | – | – | 70[1] | 70 |
| Pfropfpolymerisat B | " | 24 | 24 | 24 | 24 | 17,5 | 17,5 | 22,3 | 22,3 | 11,2 | 11,2 |
| Polymerisat C 1 | " | 16 | | | 6 | 11,5 | | 14,9 | | 16,8 | |
| Polymerisat C 2 | " | | 16 | | | | | | 14,9 | | 16,8 |
| Polymerisat C 3 | " | | | 16 | 10 | | 11,5 | | | | |
| Copolymerkautschuk D | " | | | | | 6,0 | 6,0 | | | | |
| $TiO_2$ | " | | | | | | | 7,0 | 7,0 | | |
| $Sb_2O_3$ (Stibiox MS) | " | | | | | | | | | 2,0 | 2,0 |
| Eigenschaften | | | | | | | | | | | |
| Vicat B °C | | 122 | 126 | 123 | 125 | 123 | 125 | 122 | 125 | 137 | 143 |
| Oberfläche | | glänz. | matt | matt | matt | gering matt | matt | glänz. | matt | glänz. | matt |
| Temperaturbelastbarkeitsgrenze °C | | 260 | 290 | 280 | 280 | 290 | 300 | 260 | 290 | 260 | 300 |
| Kerbschlagzähigkeit kJ/m² | | 28 | 36 | 17 | 19 | 49 | 40 | 38 | 18 | 18 | 12 |

[1]) Vergleichsbeispiele

**Patentansprüche**

1. Thermoplastische Formmassen enthaltend

A) 10 bis 80 Gew.-Teile eines aromatischen, thermoplastischen Polycarbonats,

B) 10 bis 60 Gew.-Teile eines Pfropfpolymerisats von ethylenisch ungesättigten Monomeren auf Kautschuke mit einem Kautschukgehalt von 5 bis 80 Gew.-%, bezogen auf Gewicht der Komponente B) und

C) 10 bis 60 Gew.-Teile eines thermoplastischen, harzartigen, hochmolekularen, kautschukfreien Terpolymerisats,

wobei die Summe der Gewichtsteile A + B + C jeweils 100 beträgt, und gegebenenfalls

D) 1 bis 20 Gew.-Teile, bezogen jeweils auf die Summe der Gew.-Teile A + B + C + D, welche wiederum jeweils 100 beträgt, eines zumindest partiell vernetzten Butadien-Acrylnitril-Copolymerkautschuks, der Acrylnitril zu Butadien im Gewichtsverhältnis von 15 zu 85 bis 35 zu 65 einpolymerisiert enthält, und der eine Teilchengröße von 0,05 µm bis 0,3 µm hat,

dadurch gekennzeichnet, daß C) ein Terpolymerisat aus Styrol, Acrylnitril und einer ethylenisch ungesättigten Epoxidverbindung ist, wobei das Verhältnis von Styrol zu Acrylnitril zwischen 90 : 10 und 50 : 50 liegt, und wobei C) 0.05 bis 5 Gew.-% bezogen auf Gewicht der Komponente C), an ethylenisch ungesättigter Epoxidverbindung copolymerisiert enthält.

2. Formmassen gemäß Anspruch 1, dadurch gekennzeichnet, daß die Komponente C 0,1 bis 3 Gew.-% der Epoxidverbindung copolymerisiert enthält.

3. Formmassen gemäß Ansprüchen 1 und 2, dadurch gekennzeichnet, daß sie einen Halogengehalt von 0,5 Gew.-% bis 8 Gew.-%, bezogen jeweils auf Gesamtgewicht der erfindungsgemäßen Formmasse aus den Komponenten A + B + C, inclusive Halogenverbindung und gegebenenfalls D, enthalten und gegebenenfalls zusätzlich 0,5 bis 5 Gew.-% $Sb_2O_3$, bezogen auf Gesamtgewicht aus den Komponenten A + B + C + $Sb_2O_3$ und Halogenverbindung und gegebenenfalls der Komponente D, enthalten.

4. Formmassen gemäß Ansprüchen 1 und 2, dadurch gekennzeichnet, daß sie aus den Komponenten A + B + C und gegebenenfalls D sowie Pigmenten, Gleitmitteln, Antistatika, Weichmachern, Farbstoffen und/oder Füllstoffen bestehen.

**Claims**

1. Thermoplastic moulding compositions containing

A) 10 to 80 parts by weight of an aromatic thermoplastic polycarbonate,

B) 10 to 60 parts by weight of a graft polymer of ethylenically unsaturated monomers grafted onto rubbers, with a rubber content of 5 to 80 % by weight, based on the weight of component B), and

C) 10 to 60 parts by weight of a thermoplastic, resinous, high-molecular weight rubber-free terpolymer, the sum of A + B + C being 100 parts by weight in each case, and, if appropriate,

D) 1 to 20 parts by weight, based in each case on the sum of A + B + C + D, which is again 100 parts by weight in each case, of an at least partially crosslinked, internal butadiene/acrylonitrile copolymer rubber in which the weight ratio of acrylonitrile to butadiene is from 15 : 85 to 35 : 65 and which has a particle size of 0.05 µm to 0.3 µm,

characterized in that C) is a terpolymer of styrene, acrylonitrile and an ethylenically unsaturated epoxide compound, the ratio of styrene to acrylonitrile being between 90 : 10 and 50 : 50, and where C) contains 0.05 to 5 % by weight, based on the weight of component C, of an ethylenically unsaturated, copolymerized epoxide compound.

2. Moulding compositions according to Claim 1, characterized in that component C contains 0.1 to 3 % by weight of the copolymerized epoxide compound.

3. Moulding compositions according to Claims 1 and 2, characterized in that they have a halogen content of 0.5 % by weight to 8 % by weight, based in each case on the total weight of the moulding composition according to the invention which consists of components A + B + C, including the halogen compound, and if appropriate D, and, if appropriate, additionally contain 0.5 to 5 % by weight of $Sb_2O_3$, based on the total weight of components A + B + C + $Sb_2O_3$, and halogen compound and if appropriate component D.

4. Moulding compositions according to Claims 1 and 2, characterized in that they consist of components A + B + C and if appropriate D, as well as pigments, lubricants, antistatic agents, plasticizers, dyestuffs and/or fillers.

**Revendications**

1. Matières à mouler thermoplastiques contenant

A) 10 à 80 parties en poids d'un polycarbonate thermoplastique aromatique,

B) 10 à 60 parties en poids d'un polymère greffé de monomères éthyléniquement insaturés sur des caoutchoucs ayant une teneur en caoutchouc de 5 à 80 % en poids par rapport au poids du composant B),

C) 10 à 60 parties en poids d'un terpolymère thermoplastique, résineux, de haut poids moléculaire exempt de caoutchouc, la somme des parties pondérales A + B + C s'élevant chaque fois à 100 et, le cas échéant,

D) 1 à 20 parties en poids par rapport à la somme des parties pondérales A + B + C + D qui s'élève à nouveau à 100, d'un caoutchouc à base de copolymère de butadiène-acrylonitrile au moins partiellement réticulé qui contient, à l'état polymérisé, l'acrylonitrile et le butadiène dans un rapport pondéral de 15 : 85 à 35 : 65 et possède une dimension de particule de 0,05 µm à 0,3 µm, caractérisées en ce que C) est un terpolymère de styrène, d'acrylonitrile et d'un composé époxydé éthyléniquement insaturé, le rapport de styrène à acrylonitrile se situant entre 90 : 10 et 50 : 50 et C) contenant, à l'état copolymérisé, 0,05 à 5 % en poids par rapport au poids du composant C, d'un composé époxydé éthyléniquement insaturé.

2. Matières à mouler selon la revendication 1, caractérisées en ce que le composant C contient, à l'état copolymérisé, 0,1 à 3 % en poids du composé époxydé.

3. Matières à mouler selon les revendications 1 et 2, caractérisées en ce qu'elles contiennent une teneur en halogène de 0,5 % en poids à 8 % en poids, rapportés chaque fois au poids total de la matière à mouler selon l'invention à base des composants A + B + C, y compris le composé halogéné et éventuellement D et que, le cas échéant, elles contiennent en plus 0,5 à 5 % en poids de $Sb_2O_3$ par rapport au poids total des composants A + B + C + D + $Sb_2O_3$, du composé halogéné et éventuellement du composant D.

4. Matières à mouler selon les revendications 1 et 2, caractérisées en ce qu'elles sont constituées par les composants A + B + C et, le cas échéant, par D ainsi que par des pigments, des lubrifiants, des agents antistatiques, des plastifiants, des colorants et/ou des matières de charge.